Europäisches Patentamt

European Patent Office

Office européen des brevets

(11) Publication number: **0 003 675**
**A1**

# EUROPEAN PATENT APPLICATION

(21) Application number: 79300187.6

(22) Date of filing: 07.02.79

(51) Int. Cl.²: **G 01 L 23/24, G 01 L 23/10**

(30) Priority: 08.02.78 GB 513278

(43) Date of publication of application: 22.08.79
Bulletin 79/17

(84) Designated Contracting States: **BE DE FR IT LU NL SE**

(71) Applicant: **SCOTUS PATENTVERWALTUNGS ANSTALT, Städtle 36, Vaduz (LI)**

(72) Inventor: **Beatson, Michael Frame Fullarton, 50021 Barberino Valdelsa, Florence (IT)**
Inventor: **Nunn, Terence Michael, 5a Castle Street, Dover Kent (GB)**

(74) Representative: **Tregear, George Herbert Benjamin et al, TREGEAR, THIEMANN & BLEACH Enterprise House Isambard Brunel Road, Portsmouth P01 2AN (GB)**

(54) **Pressure sensing apparatus.**

(57) This invention relates to pressure sensing apparatus for sensing cylically varying pressure in a pipe, particularly but not exclusively for sensing pressure in fuel lines. A pair of similar blocks (307) each shaped to embrace a pipe over an arc and to make line contact with the pipe at two spaced locations are located in holders (301, 302) removably clamped about the pipe.

Transducers (308), one on each block, provide equal and opposite electrical signals in dependence on bending strain in the blocks due to periodic dilatation of the pipe (303).

Title:         PRESSURE SENSING APPARATUS

This invention relates to apparatus for sensing cyclically varying pressure in a pipe, for example a fuel line to an injector on a diesel engine.

Fuel pressure variations in a diesel engine can give important information about the running of the engine and possible adjustments and repairs. It is in the highest degree undesirable to interfere with the integrity of the fuel lines. In British Patent No. 1 506 701 apparatus is described which can be clamped about a union in the fuel line. For small engines such as used in automotive applications, the space available is limited so that it will not always be possible to utilise the apparatus described earlier. The main object of the invention is to provide a simple and compact form of apparatus which can sense fuel line pressure externally, more particularly but not exclusively for automotive applications.

The invention provides apparatus for sensing cyclically varying pressure in a pipe comprising a pair of similar blocks shaped to embrace a pipe over an arc and to make line contact with the pipe at two spaced locations, means to clamp the blocks about a pipe, and a transducer on each block to provide electrical signals

0003675

in dependence on strain in the block due to periodic dilatation of the pipe.

Preferably the blocks are mounted in similar holders such that when clamped together about the pipe the blocks are spaced apart. The blocks are conveniently located in cavities in the holders in which they are surrounded with plastics material having elastic properties: this material may be cast around the blocks. Clamping the holders loads the blocks so that in operation each block acts as an arch supported at the spaced locations and loaded over its length. The transducer is preferably located at the top of the arch, being cemented on to the top surface of the block. By varying the central section and the loading the strain for a given pressure variation can be altered.

One embodiment of the invention will now be described with reference to the accompanying drawings in which:-

FIGURES 1 and 2 are respective end and side views of apparatus in accordance with the invention for sensing pressure variations in a fuel line;

FIGURE 3 is a plan view of the apparatus;

FIGURE 4 is a transverse section of the apparatus;

FIGURE 5A is an enlarged view of a block forming part of the apparatus shown assembled on a fuel line; and

FIGURES 5B and 5C are diagrammatic sections of the blocks, with crystals thereon showing, in an exaggerated manner deformation of the blocks on dilatation of the pipe.

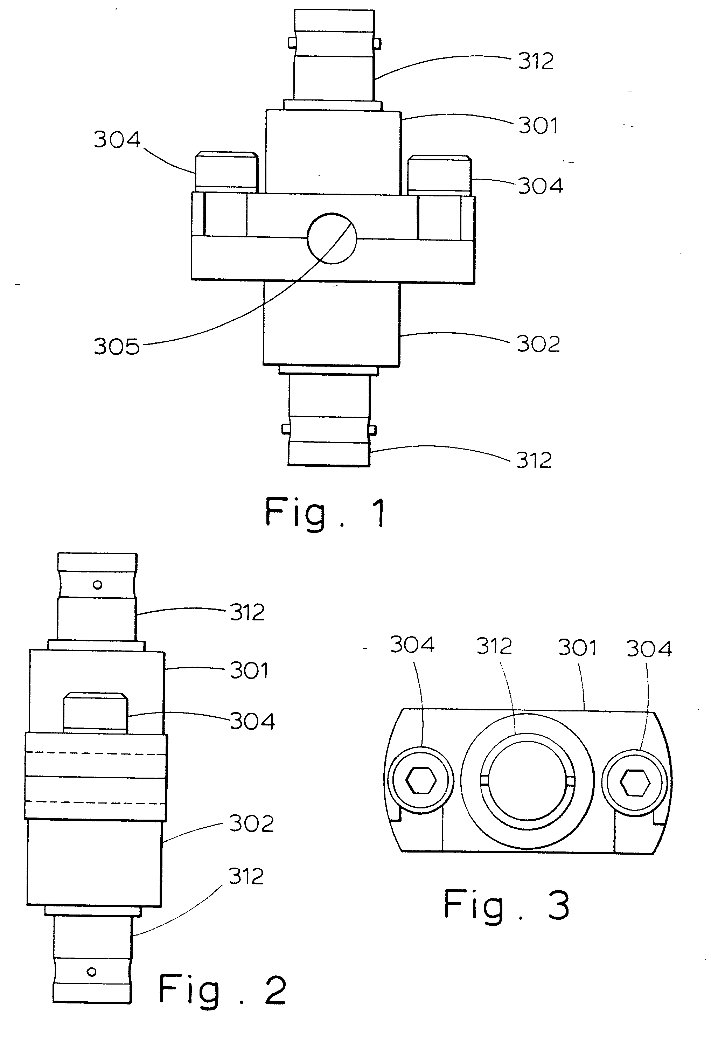

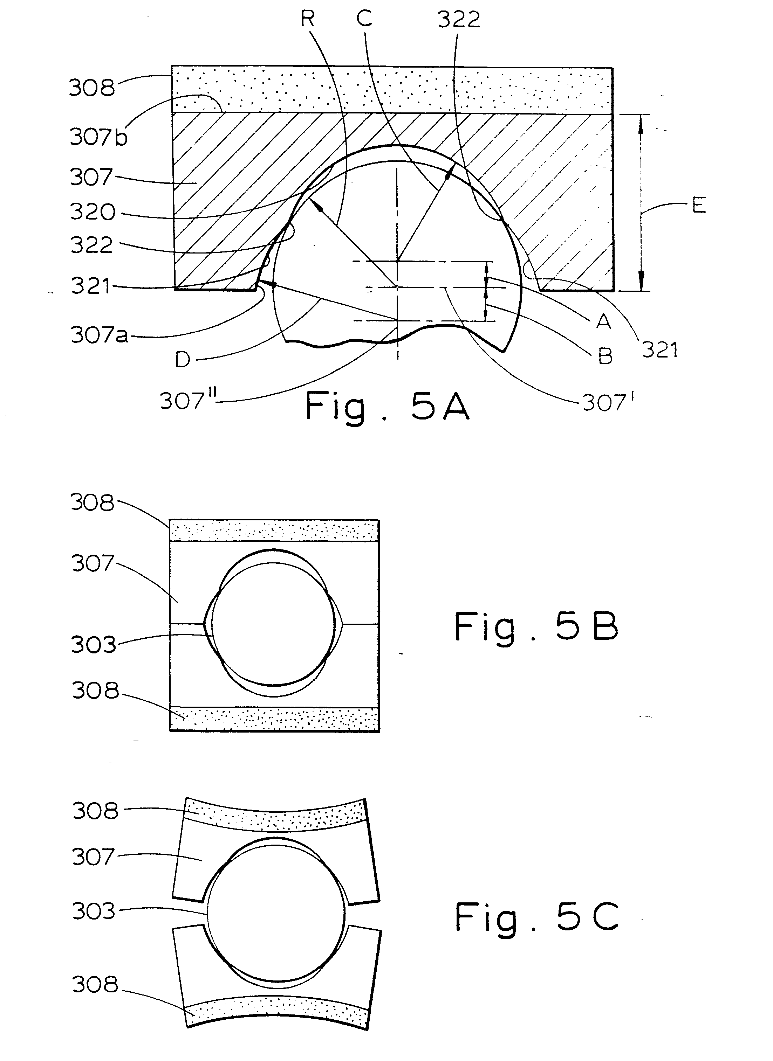

Referring now to the drawings, the form of pressure sensing apparatus there shown comprises a pair of similar rigid metallic holders designated generally 301, 302 which in use of the apparatus are clamped around a fuel pipe 303 (shown in Figure 5A) by means of a pair of screws 304. The holders define a central cylindrical aperture 305, as shown in Figures 1 and 2, and the fuel line extends through this.

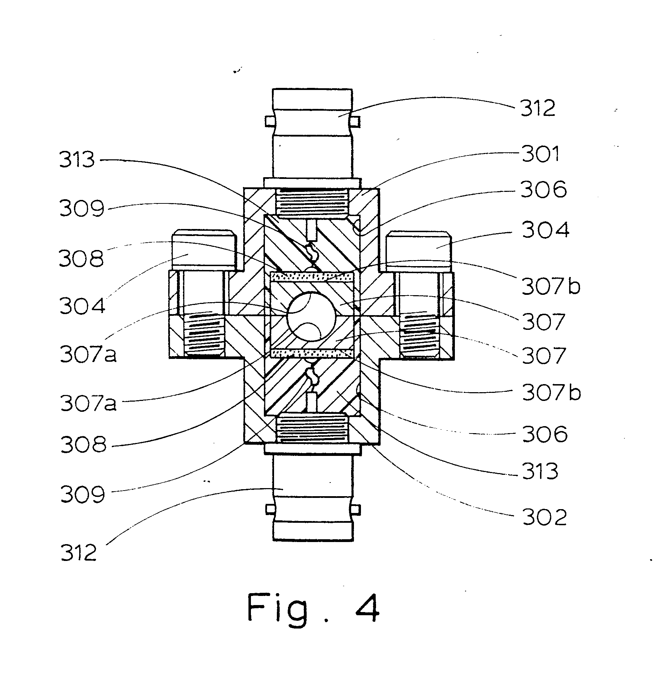

Referring now to Figure 4, the holders, 301, 302 seen in transverse section each define a generally cylindrical cavity or space 306. The cavities 306 of the two holders are aligned with their common axis at right angles to the axis of the fuel line. A metallic block 307 adapted to bear on the fuel line 33 is located coaxially in each cavity 306, with clearance at the bottom and sides of the cavity. The blocks 307 are each cylindrical, with their axes aligned on that of the cavities 306. One face 307a of the block 307 is generally concave and bears on the fuel line as will be described. A piezo-electric transducer element 308 extends over the whole circular area of the other face 307b of the block and is cemented thereto in electrical contact therewith. A connecting wire 309 is taken from the free face of the transducer element 308 to a terminal on a bayonet connector 312 mounted on the holder. It will be seen that the clearance between the block 307 and the piezo-electric element 308, and the bottom of the cavity 306, is of the same order as the depth of the block and element. The clearance between the sides of the block and the side walls of the cavity is much less.

The block 307 is conveniently of the aluminium alloy available under the designation DURAL HE 30TF as defined in British Standard Specification 1470. This alloy combines freedom from corrosion and easy machining with a modulus of elasticity which for a metal is fairly low. Alternatively the block could be made of brass.

The holders 301, 302 can be made of the same aluminium alloy, though for the holder the choice of material is less critical.

The cavity 306 around the block 307 is filled with thermosetting epoxy resin 313, for example Araldite AV 8. This material is, for a plastics material, relatively hard and elastic; but its hardness and modulus of elasticity are much less than that of the alloy of the blocks 307.

When the holders 301, 302 are secured together about a pipe 303 the holders and the blocks 307 are very slightly spaced apart so that the blocks bear on the pipe.

Each block 307 has its concave face 307a formed on two radii one, shown at C, less than the pipe outside radius R and the other, D, greater than this, as shown in Figure 5A. The blocks 307 make virtual contact on a diametual plane 307' of the pipe; this is also part of the envelope surface of the block. The smaller radius C is centred within the envelope surface 307' by a distance A. The larger radius D is centred outside the envelope 307' by a distance B. Both the centres of radii C and D and the centre of the pipe lie on the vertical centre line 307'' of the block so as to give a symmetrical arrangement. Each block 307 embraces some $180^o$ of the pipe. The arcs 320 and 321, 321 formed on the radii C and D respectively intersect to form cusps 322, 322 at 30$^O$ and 150$^O$. It is at these points 322, 322 that the block 307 bears upon the pipe.

In one construction according to the invention each cavity 306 is 12 mm in diameter and 12 mm deep, and each block 307 is 10 mm in diameter. With this construction, the preferred dimensions for various pipe diameters are as follows:-

| Fuel Pipe Size | 6 | 8 | 10 |
|---|---|---|---|
| Dimension 'A' | 0.6 | 0.8 | 1.06 |
| Dimension 'B' | 0.8 | 1.06 | 1.33 |
| Dimension 'C' | 2.75 | 3.6 | 4.66 |
| Dimension 'D' | 3.5 | 4.66 | 5.8 |
| Depth E of block | 4 | 5 | 6 |

(all dimensions in millimetres)

The radius D is the less critical of the two, C and D. While it is considered best to have the block bear at the points 30$^O$ and 150$^O$; some variation is permissible, more especially the points 322 could be moved outwards towards the ends of the 180$^O$ arc of embrace.

When fuel is supplied through the pipe 303 to an injector the pulse of pressure dilates the pipe. This in turn applies a force at the points 322 of the two blocks 307. Each block deforms elastically and the deformation is sensed by the piezo-electric crystal 308. Each crystal produces an electrical signal dependent on the deformation applied to it. The signals, by symmetry, are equal and opposite.

Each block 307 acts as a bending arch supported at the points 322 and uniformly loaded on top. The deformation of the blocks 307 on dilatation of the pipe 303 is illustrated in an exaggerated manner in Figures 5B and 5C. The shape of the block can be designed for optimum response. For example, the section at the top of the arch can be reduced. The block need not have a flat top, but can be symmetrically sloped or rounded.

If desired each block 307 can be supported by plastics material at its sides only, and not at the bottom of the cavity. The plastics material applies shear forces to the sides of the block and the loading of the arch is therefore different. Alternatively the block 307 could be supported by plastics material at the bottom of the cavity, not at the sides. The arrangement illustrated is, however, easy to make and robust.

The apparatus can readily be bolted on or removed from a fuel line of a small compact engine. It can be secured to each of the fuel lines of an engine in turn.

Appropriate bridge circuits allow the signals from the two crystals 308 to be reinforced and the noise attenuated. The signals can be displayed as a C.R.T. in relation to engine crank angle. Circuitry for this purpose is illustrated in Figures 9 and 10 of British Patent 1,506,701 referred to.

In small production engines, such as for automotive use, there is normally no means of access to cylinder pressure, and with such engines, in the circuit arrangement of Figures 9 and 10 the cylinder pressure inputs are not used. The circuit can accordingly be simplified.

-7-

While the pressure sensing device illustrated has been designed principally for smaller engines, since it can more readily be made in small sizes than the first form of apparatus described, it could also be made in sizes for use on larger engines. The table above gives certain dimensions appropriate to such engines.

The device illustrated can be used with an engine cylinder pressure sensing device, if the engine cylinder pressure is accessible, as it is on larger or experimentally adapted engines. In such case the cylinder pressure can be obtained by a closed-end tube which can be connected to the cylinder and a second pressure sensing device mounted thereon. This device can be as previously described. Pressure-dependent signals from the second device are then injected into the analysing circuit referred to.

Where in the above reference has been made to cementing of the piezoelectric crystal, it is to be understood that this cementing is done preferably under pressure using an epoxy adhesive, with the silvered side of the transducer towards the metal. It is found that electrical contact can be made satisfactorily in this way. A silver-loaded adhesive can be used but will not normally be necessary. With the crystal secured as described no second wire is required to the connectors.

CLAIMS:

1. Pressure-sensing apparatus comprising apparatus for sensing pressure variation in a pipe comprising a pair of similar blocks shaped to embrace a pipe over an arc and to make line contact with the pipe at two spaced locations, means to clamp the blocks about a pipe, and a transducer on each block to provide electrical signals in dependence on strain in the block due to periodic dilation of the pipe.

2. Apparatus as claimed in Claim 1, wherein each block is adapted to embrace a pipe over substantially a $180^{\circ}$ arc thereof as seen in sections and to make line contact with the pipe in the region of radii at $30^{\circ}$ and $150^{\circ}$ in that arc.

3. Apparatus as claimed in Claim 2, wherein each block presents a face to the pipe which is formed on two radii, one larger than the outside radius of the pipe and centred outside the envelope of the block and another radius smaller than the outside radius of the block and centred within the said envelope.

4. Apparatus as claimed in any one of Claims 1 to 3, each block presenting one face towards the pipe and a second face directed away therefrom, the block in operation of the apparatus bending cyclically in the manner of an arch, said transducer comprising a piezo-electric crystal cemented to the second face of the block to sense said bending thereof.

5. Apparatus as claimed in any of Claims 1 to 4, wherein the clamping means for each block comprises a holder defining a central space larger than the block, the block being supported in said space by cast resin

-2-

0003675

surrounding said block, the blocks being metallic and
the resin having a hardness and modulus of elasticity less
than that of the metal of the blocks, and disengageable
retainer means to retain the holders together about a
pipe with the blocks in contact therewith.

0003675

312

301

304

304

305

302

312

## Fig. 1

312

301

304

302

312

## Fig. 2

304   312   301   304

## Fig. 3

Fig. 4

0003675

308
307b
307
320
322
321
307a
D
307"

R    C    322

E

A
B
321

307'

Fig. 5A

308
307
303
308

Fig. 5 B

308
307
303
308

Fig. 5 C

European Patent Office

**EUROPEAN SEARCH REPORT**

0003675

Application number

EP 79 30 0187

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| X | US - A - 3 942 049 (B. HYANOVA et al.)<br>* Abstract; figures 1,2 *<br>-- | 1,2,4, 5 | G 01 L 23/24<br>23/10 |
| | US - A - 3 886 473 (B.R. TEITEL-BAUM et al.)<br>* Abstract; figures 1,3 *<br>-- | 1,2 | |
| | GB - A - 1 372 030 (C.A.V. LTD.)<br>* Page 1, lines 41 to 88; figures 1-4 *<br>-- | 1,4 | TECHNICAL FIELDS SEARCHED (Int.Cl.²)<br><br>G 01 L 23/24<br>23/10<br>23/18 |
| | DE - A - 2 533 078 (KROMBERG GESELLSCHAFT FUER INGENIEURLEIS-TUNGEN mbH)<br>* Claims; figure *<br>-- | 1,2 | 9/08<br>9/04<br>9/06<br>9/00<br>23/08 |
| | FR - A - 2 322 365 (SIEMENS AG)<br>* Claim 1; figure 1 *<br>-- | 1,4 | |
| | US - A - 3 603 152 (V.F. ALIBERT et al.)<br>* Abstract; figures 1,2 *<br>-- | 1,2,4 | CATEGORY OF CITED DOCUMENTS |
| | FR - A - 2 035 042 (BEATSON ENGI-NEERING CO)<br>* Page 4, lines 19-26; figure 1 *<br>---- | 1,4 | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | | | &: member of the same patent family, corresponding document |

The present search report has been drawn up for all claims

| Place of search | Date of completion of the search | Examiner |
|---|---|---|
| The Hague | 14-05-1979 | VAN ASSCHE |

EPO Form 1503.1   06.78